## Europäisches Patentamt
## European Patent Office
## Office européen des brevets

(19)

(11) Numéro de publication: **0 308 332 B1**

(12) **FASCICULE DE BREVET EUROPEEN**

(45) Date de publication du fascicule du brevet:
**27.06.90**

(51) Int. Cl.⁵: **B60J 7/043**, B60J 7/053

(21) Numéro de dépôt: **88402326.8**

(22) Date de dépôt: **15.09.88**

(54) **Dispositif de guidage et d'étanchéité d'un panneau coulissant d'obturation d'une ouverture ménagée dans une paroi horizontale.**

(30) Priorité: **18.09.87 FR 8712966**

(43) Date de publication de la demande:
**22.03.89 Bulletin 89/12**

(45) Mention de la délivrance du brevet:
**27.06.90 Bulletin 90/26**

(84) Etats contractants désignés:
**AT BE CH DE ES GB GR IT LI LU NL SE**

(56) Documents cités:
**FR-A- 2 297 151**
**FR-A- 2 384 640**
**FR-A- 2 472 705**
**FR-A- 2 562 134**

**PATENT ABSTRACTS OF JAPAN,**
**vol. 8, no. 274 (M-345)[1711], 14 décembre 1984; &**
**JP-A-59 143 719 (MAZDA K.K.) 17-08-1984**

(73) Titulaire: **Etablissements FARNIER ET PENIN, Zone Industrielle No. 2 Route de Poitiers, F-79300 Bressuire(FR)**

(72) Inventeur: **Prouteau, Philippe, 8 rue des rigaudières, F-79600 Airvault(FR)**
Inventeur: **Jeuffray, Jean-Marie, 8 rue de l'Ouche, F-79300 Bressuire(FR)**

(74) Mandataire: **Robert, Jean-Pierre et al, CABINET BOETTCHER 23, rue la Boétie, F-75008 Paris(FR)**

## Description

La présente invention concerne un dispositif pour guider un panneau coulissant, tel qu'un panneau de toit ouvrant de vehicule automobile , au dessus des bords de l'ouverture du pavillon, et pour améliorer l'étanchéité entre ce pavillon et ce panneau, lorsqu'il est dans sa position d'obturation.

Dans certains cas, les panneaux de toits ouvrants sont guidés le long de glissières profilées, qui permettent l'ouverture et à la fermeture, d'éloigner ou rapprocher le panneau de la carrosserie pour qu'il puisse coulisser au-dessus de celle-ci et qu'il puisse s'apliquer fermement sur un joint disposé autour de l'ouverture, en se rapprochant verticalement de la carrosserie lors de la fermeture du toit ouvrant. Ce mouvement de louvoiement est obtenu de manière connue par le dessin des glissières, dans lesquelles le panneau coulisse par l'intermédiaire de patins latéraux. Dans la plupart des cas, ces patins sont au même niveau que le panneau, si bien qu'en position basse la face inférieure du panneau est située au moins au niveau de la face supérieure de la carrosserie, sinon plus bas. Il faut alors disposer le joint d'étanchéité sur lequel s'appuie le panneau en position de fermeture, à un niveau inférieur à celui de la carrosserie. Il existe alors nécessairement des endroits entre le panneau et les glissières qui constituent des poches de rétention d'eau de pluie, laquelle parvient, par capillarité, à s'infiltrer entre le panneau et le joint puisque cet endroit est le point le plus bas des poches de rétention d'eau.

La présente invention entend proposer un montage qui pallie cet inconvénient, en mettant en oeuvre des moyens pour supprimer ces espaces de rétention d'eau de pluie qui de ce fait pourra s'évacuer librement.

A cet effet, l'invention a donc pour objet un dispositif de guidage et d'étanchéité d'un panneau coulissant horizontalement au-dessus d` l'ouverture d'une paroi, constitué par deux glissières rapportées le long et au-dessus des bords latéraux de l'ouverture, chacune d'elles étant constituée par deux parties successives longitudinalement, accueillant chacune un patin de guidage solidaire du panneau, chaque partie comprenant deux portions à des distances différentes de la paroi susdite réunies par une rampe pour créer un louvoiement du panneau à l'ouverture et à la fermeture, et par un joint d'étanchéité tourné vers le haut, à l'intérieur des glissières, en contact avec le panneau lorsque les patins susdits sont dans la portion de glissière la moins éloignée de la paroi.

Selon l'une des caractéristiques principales de l'invention, les patins de guidage susdits sont disposés dans un plan différent de celui du panneau et sous ce dernier, le joint d'étanchéité étant alors en surélévation par rapport à la face extérieure de la paroi.

Dans un mode préféré de réalisation, les patins sont attelés au panneau au moyen d'un profilé chaussant les bords longitudinaux de ce dernier, qui présente une section extérieure en décrochement vers le bas par rapport à la section chaussante.

Enfin, chaque glissière est attelée à la paroi au moyen d'un support qui comporte, à sa base, des chenaux d'évacuation transversaux.

L'invention sera mieux comprise au cours de la déscription donnée ci-aprés à titre d'exemple purement indicatif et non limitatif qui permettra d'en dégager les avantages et les caractéristiques secondaires.

Il sera fait référence aux dessins annexés dans lesquels:

- la figure 1 est un schéma pour rappeler les moyens connus mis en oeuvre dans l'invention qui permettent le louvoiement du panneau d'obturation,
- la figure 2 est une vue en coupe transversale d'un bord de panneau en position d'obturation de l'ouverture d'une carrosserie.

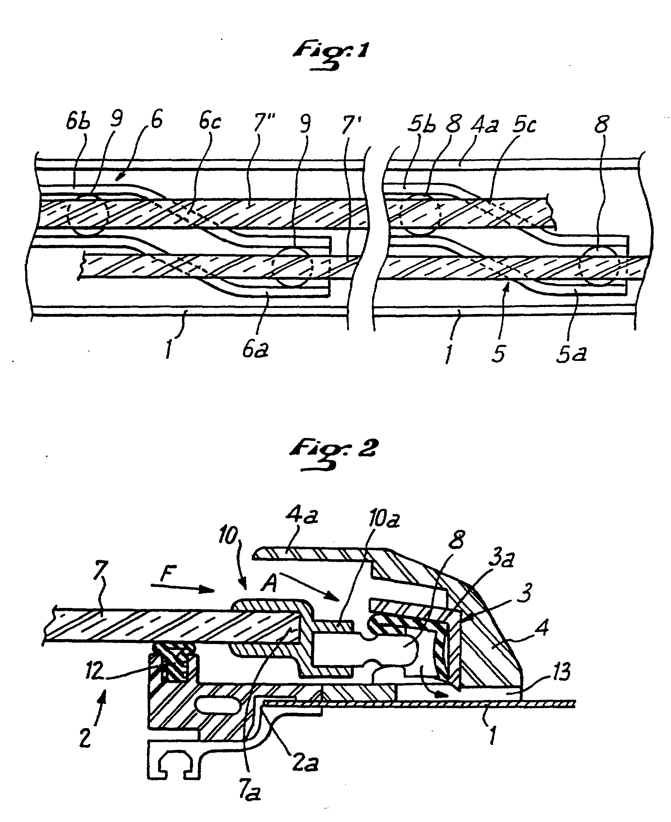

En se repportant à ces figures, on voit une paroi horizontale 1 formant le pavillon d'une voiture automobile, qui possède une ouverture 2, dont seul un bord 2a est représenté sur la figure 2. Le long de ce bord, qui est un bord longitudinal de l'ouverture, on a placé une glissière 3, en forme générale de U, équipée intérieurement d'une garniture 3a favorisant le coulissement du panneau. La glissière est contenue dans un support 4 de sa fixation par la carrosserie du véhicule, qui possède un retour 4a de protection formant également cache esthétique pour la glissière.

La figure 1, qui est une vue schématique suivant F de la figure 2, montre que chaque glissière 3 est en fait constituée par deux parties 5,6 successives longitudinalement, le long du bord 2a. Chacune de ces parties est de longueur sensiblement égale à la longueur du panneau 7 et comporte à l'une de ces extrémités une portion 5 a,6 a plus proche de la carrosserie 1 que le reste 5b,6b de leur longueur. Une rampe 5c,6c relie les deux portions 5a,5b et 6a,6b. En position de fermeture 7', le panneau 7 est maintenu proche de la carrosserie par les portions 5a,6a des glissières, grâce à des patins 8,9 de coulissement qui y sont logés ces patins étant solidaires du bord correspondant 7a du panneau. On voit qu'en déplaçant le panneau vers la gauche de la figure 1, ce dernier, par les rampes 5c,6c, s'éloigne de la carrosserie et donc peut coulisser librement, vers l'arrière du véhicule dans sa position 7".

La figure 2 est, par exemple, une vue en coupe du dispositif au niveau de la portion 5a de la glissière, l'ouverture 2 étant obturée par le panneau . Les patins 8,9 sont portés par un profilé 10 bordant le panneau 7 et possédant une section extérieure 10a de maintien des patins, située à un niveau inférieur à celui du panneau 7. Ainsi, même dans sa position 7', le panneau est éloigné de la carrosserie, et on peut border l'ouverture 2 d'un joint d'étanchéité 12 qui se trouve au dessus du niveau de cette carrosserie 1.

On voit que dans ces conditions, l'eau de pluie qui parvient au niveau de la glissière 3, possède une direction d'écoulement naturel vers l'extérieur et vers le bas (flèche A ) du fait de la disposition du plan de coulissement à un niveau plus bas que celui de la face supérieure du panneau 7, et ce contrairement aux dispositifs antérieurs où ce dénivelé n'existant pas, l'eau était contrainte de s'écouler vers l'extérieur et avait tendance à solliciter l'étanchéité entre le panneau et le joint, en s'accumulant entre la glissière et ce joint.

Pour améliorer encore l'évacuation latérale de l'eau, on a prévu entre le support de fixation 4 de la glissière et la carrosserie 1, des chenaux 13 permettant le passage de l'eau vers l'extérieur. Ces chenaux 13 sont ménagés dans le support 4 et éventuellement dans la garniture 3a de glissement.

L'invention trouve une application intéressante dans le domaine des accessoires pour véhicules automobiles.

## Revendications

1. Dispositif de guidage et d'étanchéité d'un panneau (7) coulissant horizontalement au dessus de l'ouverture (2) d'une paroi(l), constitué par deux glissières (3) rapportées le long et au-dessus des bords latéraux (2a) de l'ouverture (2), chacune d'elles étant constituée par deux parties (5, 6) successives longitudinalement, accueillant chacune un patin (8, 9) de guidage solidaire du panneau (7), chaque partie (5, 6) comprenant deux portions (5a, 5b) (6a, 6b), à des distances différentes de la paroi (l) susdite, réunies par une rampe (5c, 6c), pour créer un louvoiement du panneau (7) à l'ouverture et à la fermeture, et par un joint d'étanchéité (12) tourné vers le haut, à l'intérieur des glissières (3), en contact avec le panneau (7) lorsque les patins (8,9) susdits sont dans la portion (5a,6a) de glissière la moins éloignée de la paroi(1), caractérisé en ce que les patins (8, 9) de guidage susdits sont disposés dans un plan différent de celui du panneau(7) et sous ce dernier, le joint (12) susdit étant alors en surélévation par rapport à la face extérieure de la paroi (1).

2. Dispositif selon la revendication 1 caractérisé en ce que les patins (8,9) sont attelés au panneau 7 au moyen d'un profilé (l0) chaussant ses bords longitudinaux 7a, qui présente une section extérieure (10a) en décrochement vers le bas par rapport à sa section chaussant le bord(7a).

3. Dispositif selon la revendication(l) ou la revendication 2 caractérisé en ce que chaque glissière(3)est attelée à la paroi (1) au moyen d'un support (4) qui comporte à sa base des chenaux (13) d'évacuation de l'eau.

## Patentansprüche

1. Einrichtung zum Führen und zum Abdichten einer horizontal oberhalb der Öffnung (2) in einer Dachwand (1) verschiebbaren Platte (7), umfassend zwei entlang und oberhalb der Seitenränder (2a) der Öffnung (2) verlaufende Führungsschienen (3), deren jede von zwei in Längsrichtung hintereinander liegenden Schienenteilen (5, 6) gebildet ist und deren jeder einen mit der Platte (7) fest verbundenen Gleitschuh (8, 9) aufnimmt, wobei jeder Schienenteil (5, 6) zwei Abschnitte (5a, 5b; 6a, 6b) hat, die unterschiedliche Abstände von der Dachwand (1) haben und jeweils über einen Übergangsabschnitt (5c, 6c) miteinander verbunden sind, so daß sie eine Führung für die Platte (7) beim Öffnen und Schließen bilden, und ferner umfassend eine nach oben gerichtete, innerhalb der Führungsschienen (3) angeordnete Dichtung (12), die an der Platte (7) anliegt, wenn die Gleitschuhe (8, 9) sich in dem von der Dachwand (1) fernen Abschnitt (5a, 6a) der Gleitschienen befinden, dadurch gekennzeichnet, daß die Gleitschuhe (8, 9) in einer außerhalb und unterhalb der Ebene der Platte (7) liegenden Ebene liegen, und daß die Dichtung (12) bezüglich der Außenseite der Dachwand (1) nach oben übersteht.

2. Einrichtung nach Anspruch 1, dadurch gekennzeichnet, daß die Gleitschuhe (8, 9) mit der Platte (7) mittels eines Profils (10) verbunden sind, welches deren Längsränder (7a) einfaßt und welches einen gegenüber dem den Längsrand (7a) einfassenden Abschnitt nach unten abgekröpften Außenabschnitt (10a) hat.

3. Einrichtung nach Anspruch 1 oder 2, dadurch gekennzeichnet, daß jede Führungsschiene (3) mit der Dachwand (1) über ein Trägerprofil (4) verbunden ist, welches in seinem Basisbereich Wasserablaufrinnen (13) hat.

## Claims

1. A sealing and guide device for a panel (7) sliding horizontally over an opening (2) through a wall (1), the device being constituted by two slideways (3) disposed along and above the lateral edges (2a) of the opening (2), with each of the slideways being constituted by two longitudinally successive parts (5, 6), each receiving a guide skid (8, 9) fixed to the panel (7), each part (5, 6) comprising two portions (5a, 5b) (6a, 6b) at different distances from said wall (1) and interconnected by a slope (5c, 6c) for imparting a swinging action to the panel (7) on opening and closing, the device being further constituted by a sealing gasket (12) facing upwards and disposed between the slideways (3) to make contact with the panel (7) when said skids (8, 9) are in those slideway portions (5a, 6a) which are closest to the wall (1), the device being characterized in that said guide skids (8, 9) are disposed in a plane different from the plane of the panel (7) and beneath the panel, with said gasket (12) then standing proud above the outside face of the wall (1).

2. A device according to claim 1, characterized in that the skids (8, 9) are coupled to the panel (7) by means of a section bar (10) fitted over the longitudinal edges (7a) of the panel and having a downwardly stepped outer section (10a) which is lower than its section fitted over the edge (7a).

3. A device according to claim 1 or 2, characterized in that each slideway (3) is coupled to the wall (1) by means of a support (4) which includes water evacuation channels (13) in its base.

*Fig. 1*

6b   9   6   6c   7"   9   7'       5b  8  4a  5c       8

1       6a       1       1   5   5a

*Fig. 2*

4a      10a
10          8   3a
7       F       A       3
                        4
12                              13
2       2a              1
        7a